(19) Europäisches Patentamt / European Patent Office / Office européen des brevets

(11) **EP 2 761 770 B1**

(12) **EUROPEAN PATENT SPECIFICATION**

(45) Date of publication and mention
of the grant of the patent:
**23.11.2016 Bulletin 2016/47**

(21) Application number: **12836672.1**

(22) Date of filing: **28.09.2012**

(51) Int Cl.:
*H04B 7/02* (2006.01)     *H04J 11/00* (2006.01)
*H04W 4/06* (2009.01)     *H04B 7/06* (2006.01)
*H04L 5/00* (2006.01)     *H04L 12/18* (2006.01)
*H04L 25/02* (2006.01)     *H04W 16/02* (2009.01)
*H04W 28/10* (2009.01)     *H04W 36/00* (2009.01)
*H04W 48/12* (2009.01)     *H04W 52/02* (2009.01)
*H04W 72/04* (2009.01)     *H04W 76/04* (2009.01)
*H04W 72/08* (2009.01)     *H04W 84/04* (2009.01)

(86) International application number:
**PCT/US2012/057782**

(87) International publication number:
**WO 2013/049479 (04.04.2013 Gazette 2013/14)**

(54) **JOINT TRANSMISSION IN A WIRELESS NETWORK**

GEMEINSAME ÜBERTRAGUNG IN EINEM DRAHTLOSEN NETZWERK

TRANSMISSION COMBINÉE DANS UN RÉSEAU SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2011 US 201161542086 P**

(43) Date of publication of application:
**06.08.2014 Bulletin 2014/32**

(73) Proprietor: **Intel Corporation**
**Santa Clara, CA 95054 (US)**

(72) Inventors:
• **ZHU, Yuan**
**11**
**Beijing 100012 (CN)**
• **CHEN, Xiaogang**
**11**
**Beijing 100080 (CN)**
• **DAVYDOV, Alexei**
**Nizhny Novgorod**
**Niz 603132 (RU)**
• **LI, Qinghua**
**San Ramon, California 94582 (US)**

(74) Representative: **Hufton, David Alan**
**HGF Limited**
**Fountain Precinct**
**Balm Green**
**Sheffield S1 2JA (GB)**

(56) References cited:
**WO-A1-2010/093301      WO-A2-2011/118993
US-A1- 2010 260 151      US-A1- 2011 199 986
US-A1- 2011 199 986**

• **SAMSUNG: "CRS interference cancellation in HetNet scenarios for UE performance", 3GPP DRAFT; R1-112507 CRS INTERFERENCE CANCELLATION IN HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537592, [retrieved on 2011-08-16]**
• **SAMSUNG: 'CRS interference cancellation in HetNet scenarios for UE performance requirements' 3GPP TSG-RAN WG1 #66 22 August 2011, ATHENS, GREECE, pages 1 - 3, XP050537592**

**(Cont. next page)**

- **NOKIA ET AL.: 'On the need for inter-cell CSI-RS muting' 3GPP TS G-RAN WG1 MEETING #60 22 February 2010, SAN FRANCISCO, USA, XP050418891**

**Description**

<u>Background</u>

This relates generally to sending data over wireless networks. This application claims priority to provisional application 61/542,086, filed September30, 2011, which application is hereby expressly incorporated herein.

As mobile and wireless networks grow in popularity, radio and wireless communication standards must adapt to meet ever increasing bandwidth requirements and user demand. Such standards include the Third Generation Partnership Project (3GPP) Long Term Evolution (LTE) and Long Term Evolution-Advanced (LTE-Advanced) systems.

Using these protocols, various devices may use wireless communication schemes to communicate with a data network. For example, each device may establish a wireless connection to a local base station in order to access a broader data network. Thus, multiple devices may communicate with each other by accessing the data network through multiple base stations.

<u>Brief Description Of The Drawings</u>

Some embodiments are described with respect to the following figures:

Fig. 1 is a schematic depiction of an example network configuration in accordance with one or more embodiments;

Fig. 2 is a depiction of a table used by an example network configuration in accordance with one or more embodiments;

Fig. 3 is a schematic depiction of an example user device in accordance with one or more embodiments;

Fig. 4 is a schematic depiction of an example base station in accordance with one or more embodiments; and

Fig. 5 is a flow chart in accordance with one or more embodiments.

<u>Detailed Description</u>

In wireless communications, one area of particular interest may be cooperative multiple point (CoMP) transmission. Under CoMP multiple base stations may be able to transmit downlink signals to a user device at the same time. The user device may then try to decode all the downlink signals simultaneously in order to improve reception conditions and increase data throughput.

Under 3GPP LTE and LTE-Advanced, one type of CoMP transmission under Scenario 3 may be joint processing. During joint processing, multiple base stations may coordinate with each other to simultaneously transmit to and from user devices. As such, there may be an increased chance of signal collision between the various signals sent by the base stations. For example, reference signals used to estimate channel conditions may collide and/or interfere with signals containing user data. User devices may thus encounter some challenges in decoding and differentiating the various signals.

Some strategies for reducing interference between user data and reference signals may include muting certain portions of the user data signal during transmission. While doing so may reduce interference, muting portions of the user data signal may decrease data throughput to the user device and may cause the user device to underestimate the level of interference during channel estimation.

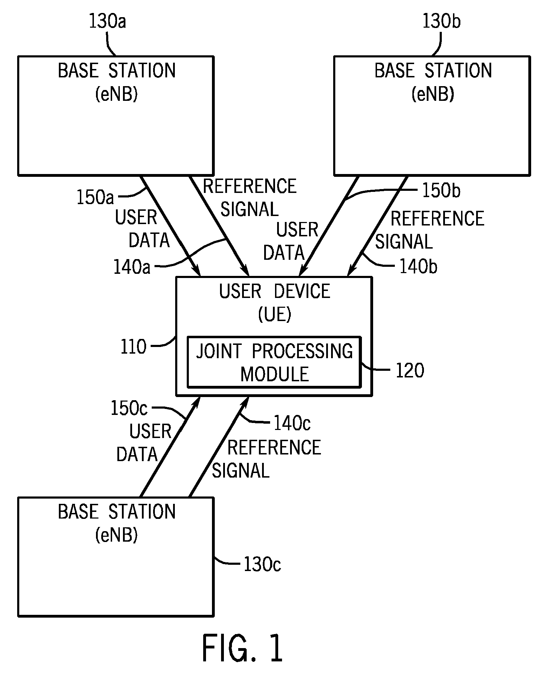

FIG. 1 represents a system 100 for filtering reference signal data from user data in a wireless network according to one or more embodiments. The system may include a user device 110 in communication with multiple base stations 130a-c. In some implementations, the user device 110 may include a joint processing module 120 capable of receiving multiple signals simultaneously from the base stations 130a-b. For example, each base stations 130a-b may send a reference signal 140a-c and user data 150a-c to the user device 110.

The user device 110 may be any electronic device capable of communication over a wireless network. For example, the user device 110 may include a desktop computer, laptop computer, mobile phone, tablet personal computer, personal digital assistant, digital camera, and/or any other electronic device. Furthermore, while FIG.1 illustrates only one user device 110, it should be understood that any number of user devices may be in communication with the base stations 130a-c.

In some implementations, the system 100 may operate according to LTE-Advanced specifications. As such, the base stations 130a-c may be referred to as evolved Node Bs (eNBs) while the user device 110 may be referred to as user equipment (UE). Furthermore, the system 100 may be capable of using cooperative multiple point transmission (CoMP) Scenario 3. In particular, the base stations 130a-c may have the ability to perform joint processing to coordinate transmission of various signals simultaneously to the user device 110.

Thus, in one or more embodiments, some of these signals may include reference signals 140a-c and user data 150a-c. For example, the reference signals 140a-c may be cell specific reference signals (CRS) sent to the user device 110 to perform channel estimation. The user device 110 may compare characteristics of the reference signals 140a-c as they are received to their characteristics when they were sent. By analyzing any differences in these characteristics, channel estimation may be calculated.

User data 150a-c may be any data including image data, video data, media data, control data and/or the like. Furthermore, the user data 150a-c may be sent on the physical downlink shared channel (PDSCH) according to the LTE-Advanced specification. In some implementations using joint processing of the base stations 130a-c, the reference signals 140a-c and the user data 150a-c may experience interference with each other. Thus, the joint processing module 120 may receive the interfering signals and filter out one or more of the reference signals 140a-c and/or user data 150a-c.

Thus, the joint processing module 120 may receive the interfering signals and filter out one or more of the reference signals 140a-c and/or user data 150a-c. In some embodiments, the join processing module 120 may be capable of performing successive interference cancellation (SIC). SIC may enable the join processing module 120 to decode two or more signals concurrently. For example, suppose a first signal and a second signal reach the join processing module 120 simultaneously to form a combined signal and that the first signal is the stronger of the two. Using SIC, the join processing module 120 may first decode the first signal, which is stronger, and then subtract the first signal out from the combined signal. As a result, the join processing module 120 may then be able to extract the second, weaker signal from the residue.

In some embodiments, the joint processing module 120 may simultaneously receive a reference signal 140a-c and user data 150a that interfere and/or collide with one another.Under the LTE and LTE-Advanced, such collisions may occur on one or more collided resource elements. A resource element may be the basic unit of physical resource in LTE and may be represented as an indexed pair of a sub-carrier and a modulation (e.g., Orthogonal frequency-division multiplexing (OFDM)) symbol.

Thus, a collided resource element may include a superimposed signal of both the reference signal 140a-c and the user data 150a-c. Because the reference signal 140a-c may be the stronger signal, the joint processing module may first detect the reference signal 140a-c and estimate its channel response. Then, the joint processing module 120 may perform SIC on the superimposed signal to filter out the reference signal 140a-c. That is, the reference signal 140a-c may be reconstructed and subtracted out from the superimposed signal. As a result of the subtraction, the remaining downlink user data 150a-c may be detected and/or decoded.

In some embodiments, a precoded data symbol may be sent over a pair of collided resource elements. Thus, the collided resource elements may be used as a pair during decoding of the data symbol. For example, after canceling the reference signal 140a-c on the pair of collided resource elements, each resource element of the pair may include parts of the precoded data symbol. However, due to the cancelation, some noise may still be present that obscures coherent decoding of the data symbol. Therefore, the remaining signal on each collided resource element may be combined, and decoding of the data symbol may be performed on this combined signal.

In some embodiments, simultaneous transmission of reference signals 140a-c and user data 150a-c from multiple base stations 130a-c over collided resource elements may be viewed as a form of spatial multiplexing between the base stations 130a-b. Furthermore, from the perspective of a single resource element, the spatial multiplexing can be viewed as a mathematical expression. For example, the mathematical expression for using two collided resource elements (from two different joint transmission cells e.g., base stations 130a-b) to transmit one user data 150a-c resource element (e.g., a PDSCH resource element) is given below. These mathematical expressions may be in the context of the LTE and/or LTE-Advanced specifications.

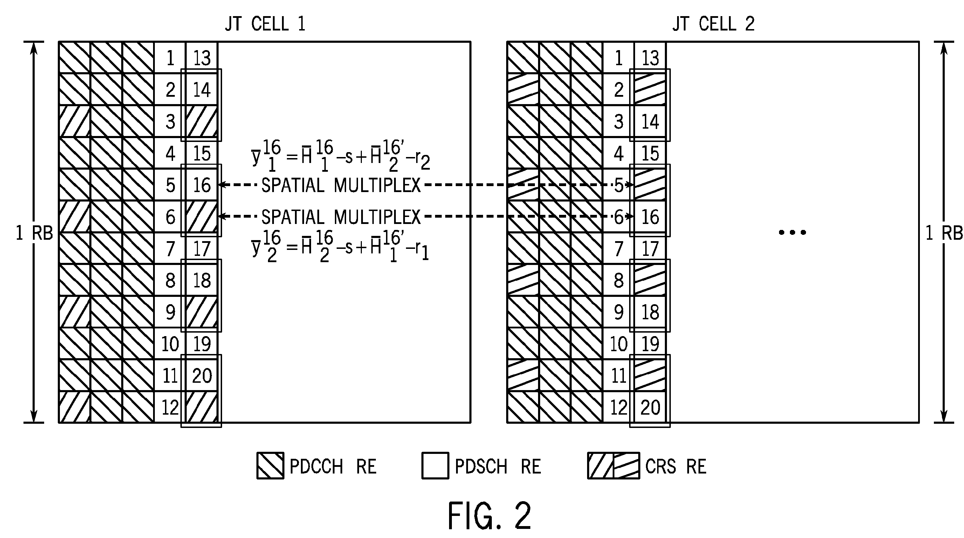

The following expressions may be made with focus on resource element 16 of Fig. 2. First, the transmission of one PDSCH resource element over two collidedresource elements can be expressed as equation (1)

$$\begin{cases} \overline{y}_3^{16} = H_1^{16} P_1 \overline{s} + H_2^{16} \overline{e}_2 r_2 + \overline{n}_1 \\ \overline{y}_2^{16} = H_2^{16} P_2 \overline{s} + H_1^{16} \overline{e}_1 r_1 + \overline{n}_2 \end{cases} (1)$$

where $\overline{y}_i^{16}$ is the received vector when PDSCH of cell i sends reference signal$r_i$ and the remaining joint transmission cell send data (vector or symbol) s; $r_i$ is the reference signal sent by cell i; $H_i^{16}$ is the channel matrix of the downlink channel from cell i eNB (base station 130a-c) to the UE (user device 110); $P_i$ is the beamforming matrix for sending the data $\overline{s}$ from cell i eNB to the UE; $\overline{e}_i$ is the antenna selection vector e.g. $[1\ 0\ \cdots\ 0]^T$for cell i eNB; $\overline{n}_i$ is the noise vector seen by the UE when cell i sends reference signal$r_i$. It should be noted that the full beamforming matrix of the joint transmission on the non-collided resource element is $P = \begin{bmatrix} P_1 \\ P_2 \end{bmatrix}$. Namely, the full beamforming matrixes of the joint transmission on the collided resource element are $\begin{bmatrix} P_1 \\ 0 \end{bmatrix}$ and $\begin{bmatrix} 0 \\ P_2 \end{bmatrix}$ with $P = \left( \begin{bmatrix} P_1 \\ 0 \end{bmatrix} + \begin{bmatrix} 0 \\ P_2 \end{bmatrix} \right)$, corresponding to the upper and lower parts of P, respectively. In other words, the UE may observe different parts of the full beamformed channel on each collided resource element.

After cancelling the reference signal interference, the UE may combine the two partial observations to get the full observation of data s as:

$$\overline{y}^{16} = (\overline{y}_1^{16} + \overline{y}_2^{16}) = [H_1^{16} \quad H_2^{16}] \begin{bmatrix} P_1 \\ P_2 \end{bmatrix} \overline{s} + \overline{n} \qquad (2)$$

It should be noted that $H^k = [H_1^k \quad H_2^k]$ is the full channel matrix for joint transmission on the k-th resource

element and $P = \begin{bmatrix} P_1 \\ P_2 \end{bmatrix}$ is the beamforming matrix for the non-collided resource element. Finally, the UE may use the reference signal to coherently decode the PDSCH using the observations from both collided and non-collided resource elements. Other resource elements such as resource elements 13, 14 and 15 in Fig. 2 can be processed in a similar manner.

In some embodiments under the LTE and/or LTE-Advanced specifications, it may be desirable for the user device to operate at a relatively high Signal to Interference and Noise Ration (SINR). Thus, a relatively high modulation and coding scheme (MCS) may typically be selected for PDSCH transmission (i.e., transmission of user data 150a-c) from a base station 130a-c to a user device 110. However, the higher the MCS that is selected for PDSCH transmission from a particular base station, the more susceptible the PDSCH transmission may be to interference with reference signals from other base stations. Furthermore, even after performing interference cancelation as described above, interference with residual reference signals may still occur. In other words, PDSCH transmission using relatively high MCS may still be susceptible to interference from residual reference signals under a joint transmission scheme.

Thus, in one or more embodiments, a lower MCS order may be used for PDSCH transmission, relative to the initial MCS order fed back by a user device, on resource elements that collide with reference signals 140a-c (e.g., resource elements 14, 16, 18, and 20 in Fig. 2). For the other resource elements that do not experience any collision during PDSCH transmission, the initial MCS order fed back by the user device 110 may still be used. For example, suppose a user device 110 feeds back a MCS order corresponding to 64QAM. In this scenario, the PDSCH transmitting base station 130a-c may elect to use 16QAM/QPSK in resource elements that have collisions with reference signal data 140a-c and maintain 64QAM in the other resource elements. Thus, a relatively high throughput for PDSCH transmission may be maintained with relatively low interference from reference signal data during joint transmission.

In other embodiments, a relatively high MCS order may be used during any PDSCH transmission. However, the user device 110 may elect to demodulate the relatively high order MCS as a lower order MCS. For example, the user device 110 may set the log likelihood ration (LLR) of some bits to zero.

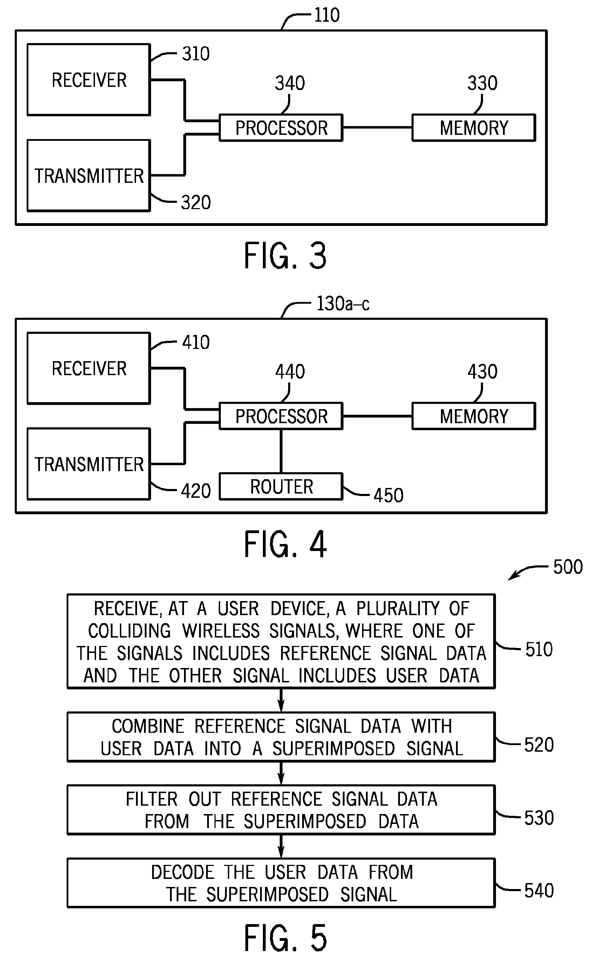

FIG. 3 represents a system depiction of the user device 130 of FIG. 1. The user device may include a receiver 310 for receiving data and a transmitter 320 for transmitting data. In one or more embodiments, the receiver 310 and the transmitter 320 may be combined to form a transceiver capable of both receiving and transmitting data. For example, the receiver 310 may receive the reference signal 120a-b from the base station 105 while the transmitter 320 may transmit the CSI signal 125 back to the base station 105.

Additionally, the user device 110 may also include a memory 330 for storing instructions and a processor 340 for executing those instructions. In one or more embodiments, Join Processing Module120(not shown) may include the processor 340 and memory 330 or may be otherwise in communication with the processor 340 and the memory 330. In other embodiments, the Join Processing Module120may be a program stored in the memory 330, and thereby provide instructions for the processor 340 to execute. As such, the processor 340 may carry out instructions from the Join Processing Module120to perform interference canceling as described above with reference to FIG. 1.

While FIG. 3 illustrates only one of each component, it should be understood that multiple instances of these components are also contemplated within the present disclosure. For example, the user device 110 may also include more than one processor and more than one memory. Furthermore, the user device 110 may also include multiple storage devices.

Similarly, FIG. 4 represents a system depiction of an example base station 130a-c that may be used to perform joint transmission with other base stations 130a-c to the user device 110. Thus, the base station 130a-c may include similar components to those illustrated in the user device 110 of FIG. 3. Specifically, the base station 130a-cmay also include a receiver 410, and transmitter 420, a processor 440, and memory 430. Additionally, the base station 105 may also include a router 450 to route communication between various user devices. In one or more embodiments, the memory 430 may store the table 200 illustrated in Fig. 2.

Furthermore, the base station 130a-cmay also include a Joint Transmission Logic (not shown) in communication with the processor 440 and memory 460. In one or more embodiments, Joint Transmission Logic 108 may include the processor 440 and memory 430. In other embodiments, the Joint Transmission Logic 130 may be a program stored in the memory 430, and thereby provide instructions for the processor 440 to execute. As such, the processor 440 may carry out instructions from the Joint Transmission Logic 108 to determine joint transmission signaling as described above with reference to FIG. 1. For example, the joint transmission logic 108 may determine that for a particular PDSCH transmission, a different MCS is to be used than the initial MCS fed back from the user device 120.

FIG. 5 represents a flow diagram depicting a method 500 for performing joint transmission in a wireless network according to one or more embodiments. The method may begin in step 510 when a user device wirelessly receives a plurality of colliding wireless signals, from a base station. One of the colliding wireless signals may include reference signal data while the other wireless signal may include user data.

Then, in step 520, the reference signal data and the user data may be combined into a superimposed signal. In step 530, the user device may filter out the reference signal data from the superimposed signal. As previously discussed, this process may involve Successive Interference Canceling by the user device.

Finally, in step 540, the user device may decode the user data from the superimposed signal. Thus, the user device may be capable of receiving simultaneous joint transmissions from multiple base stations even through significant amount of signal collision and interference. Furthermore, such joint transmission may be received without having to mute certain colliding user data resource elements that would otherwise decrease user data throughput to user device.

Instructions of software described above (including the steps described in FIG.5) may be loaded for execution on a processor (such as the processor illustrated in FIG. 3 and/or FIG. 4) A processor can include a microprocessor, microcontroller, processor module or subsystem, programmable integrated circuit, programmable gate array, or another control or computing device. As used here, a "processor" can refer to a single component or to plural components (e.g., one CPU or multiple CPUs).

Data and instructions are stored in respective storage devices, which are implemented as one or more computer-readable or machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some or all of these details. Other implementations may include modifications and variations from the details discussed above. It is intended that the appended claims cover such modifications and variations.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

The following clauses and/or examples pertain to further embodiments:

One embodiment may include a method including: receiving, at a user equipment (UE) operating within a 3rd Generation Partnership Project (3GPP), Long Term Evolution-Advanced (LTE-Advanced) network via a Cooperative Multiple Point Transmission (CoMP) Scenario 3, a plurality of colliding wireless signals, wherein one of the wireless signalscomprises reference signal data and another of the wireless signals comprises user data sent over a Physical Downlink Shared Channel (PDSCH); combining the reference signal data with the first user data into a superimposed signal;filtering out the reference signal data from the superimposed signal; and decoding the user data from the superimposed signal.

The method may also include that the colliding wireless signals are received from evolved node Bs (eNBs) simultaneously transmitting to the UE. The method may also include that the colliding wireless signals are sent as a joint transmission from the eNBs.

Furthermore, the method may also include that filtering out the reference signal data from the superimposed signal includes: detecting the reference signal data from the superimposed signal; estimating at least one channel response from the reference signal data; and subtracting the reference signal data from the superimposed wireless signal. The method may also include that after subtracting the reference signal data from the superimposed signal, the remaining part of the superimposed signal is the user data. The method may also include that the plurality of colliding wireless signals are sent over colliding resource elements.

Additionally, the method may include that the reference signal data is received on a first resource element, and the user data is received on a second resource element. The method may also include that the colliding reference signals are cell-specific reference signals. The method may also include that none of the user data is muted.

Another embodiment may also be at least one machine readable medium including a plurality of instructions that in response to being executed by a computer device, cause the computer device to carry out the above-described method.

A further embodiment may be a user equipment (UE)including: a transceiver; and a joint processing module having a memory and a processor, wherein the UE operates within a 3rd Generation Partnership Project (3GPP), Long Term Evolution-Advanced (LTE-Advanced) network, and wherein the memory is to store instructions, and the processor is to execute the instructions to: receive, at the transceiver via a Cooperative Multiple Point Transmission (CoMP) Scenario 3, a first wireless signal on a first resource element colliding with a second wireless signal on a second resource element, wherein the first wireless signal comprises reference signal data and the second wireless signal comprises user data sent over a Physical Downlink Shared Channel (PDSCH); combine the reference signal data with the user data into a superimposed signal; filter out the reference signal data from the superimposed signal; and decode the user data from the super imposed signal.

The UE may also include a display. The UE may also include that the colliding wireless signals are received from multiple base stations simultaneously transmitting to the system. The UE may also include that the instructions tofilter out the reference signal data from the superimposed signalfurther include instructions to: detect the reference signal data from the superimposed signal; estimate at least one channel response from the reference signal data; and subtract the reference signal data from the superimposed wireless signal.

Furthermore, the UE may include that after subtracting the reference signal data from the superimposed signal, the remaining part of the superimposed signal is the user data. The UE may also include that the plurality of colliding wireless signals are cell-specific reference signals.

Another embodiment may be an evolved node B (eNB), including: a transceiver; and a joint transmission logic having a memory and a processor, wherein the eNB operates within a 3rd Generation Partnership Project (3GPP), Long Term Evolution-Advanced (LTE-Advanced) network, wherein the memory is to store instructions, and the processor is to execute the instructions to: receive, via the transceiver, an initial modulation and coding scheme from a user equipment (UE); and transmit user data, using a lower modulation and coding scheme than the initial modulation and coding scheme, over a first resource element that collides with reference signal data over a second resource element.

The eNB may also include that the memory further comprises instructions to transmit, using the initial modulation and coding scheme, user data over a third resource element that does not collide with reference signal data. The eNB may also include that the reference signal data originates from a second eNB transmitting to the UE simultaneously with the eNB via the Cooperative Multiple Point Transmission (CoMP) Scenario 3.

## Claims

1. A method, comprising:

    receiving, at a user equipment (UE) operating within a 3rd Generation Partnership Project (3GPP), Long Term Evolution-Advanced (LTE-Advanced) network via a Cooperative Multiple Point Transmission (CoMP) Scenario 3, a plurality of colliding wireless signals, wherein one of the wireless signals comprises reference signal data and another of the wireless signals comprises user data sent over a Physical Downlink Shared Channel (PDSCH);
    combining the reference signal data with the user data into a superimposed signal;
    filtering out the reference signal data from the superimposed signal; and
    decoding the user data from the superimposed signal.

2. The method of claim 1, wherein the colliding wireless signals are received from multiple evolved node Bs (eNBs) simultaneously transmitting to the UE.

3. The method of claim 2, wherein the colliding wireless signals are sent as a joint transmission from the multiple eNBs.

4. The method of claim 1, wherein filtering out the reference signal data from the superimposed signal comprises:

    detecting the reference signal data from the superimposed signal;
    estimating at least one channel response from the reference signal data; and
    subtracting the reference signal data from the superimposed wireless signal.

5. The method of claim 4, wherein after subtracting the reference signal data from the superimposed signal, the remaining part of the superimposed signal is the user data.

6. The method of claim 1, wherein the plurality of colliding wireless signals are sent over colliding resource elements.

7. The method of claim 6, wherein the reference signal data is received on a first resource element, and the user data is received on a second resource element.

8. The method of claim 6, wherein the colliding reference signals are cell-specific reference signals.

9. The method of claim 1, wherein none of the user data is muted.

10. At least one machine readable medium comprising a plurality of instructions that in response to being executed by a computer device, cause the computer device to carry out a method according to any of claim 1 to 9.

11. A user equipment (UE), comprising:

    a transceiver; and
    a joint processing module having a memory and a processor, wherein the UE operates within a 3$^{rd}$ Generation Partnership Project (3GPP), Long Term Evolution-Advanced (LTE-Advanced) network, and wherein the memory is to store instructions, and the processor is to execute the instructions to:

        receive, at the transceiver via a Cooperative Multiple Point Transmission (CoMP) Scenario 3, a first wireless signal on a first resource element colliding with a second wireless signal on a second resource element, wherein the first wireless signal comprises reference signal data and the second wireless signal comprises user data sent over a Physical Downlink Shared Channel (PDSCH);
        combine the reference signal data with the user data into a superimposed signal;
        filter out the reference signal data from the superimposed signal; and
        decode the user data from the superimposed signal.

12. The UE of claim 11, wherein a precoded data symbol is to be sent over the first resource element and the second resource element.

13. The UE of claim 12, wherein filtering out the reference signal data results in a first remaining signal on the first resource element and a second remaining signal on a second resource element.

14. The UE of claim 13, wherein the instructions to decode the user data from the superimposed signal further comprise instructions to:

    combine the first remaining signal with the second remaining signal

15. The UE of claim 11, wherein the instructions to filter out the reference signal data from the superimposed signal further comprise instructions to:

    detect the reference signal data from the superimposed signal;
    estimate at least one channel response from the reference signal data; and
    subtract the reference signal data from the superimposed wireless signal.

**Patentansprüche**

1. Verfahren, umfassend:

    Empfangen, an einem Benutzergerät (User Equipment, UE), das innerhalb eines 3rd Generation Partnership Project (3GPP), Long Term Evolution-Advanced (LTE-Advanced) Netzwerks über ein Cooperative Multiple Point Transmission (CoMP) Szenario 3 betrieben wird, einer Vielzahl von kollidierenden drahtlosen Signalen, wobei eines der drahtlosen Signale Bezugssignaldaten umfasst und ein anderes der drahtlosen Signale Benutzerdaten umfasst, die über einen Physical Downlink Shared Channel (PDSCH) gesendet werden;
    Kombinieren der Bezugssignaldaten mit den Benutzerdaten zu einem Überlagerungssignal;
    Herausfiltern der Bezugssignaldaten aus dem Überlagerungssignal; und
    Dekodieren der Benutzerdaten aus dem Überlagerungssignal.

2. Verfahren nach Anspruch 1, wobei die kollidierenden drahtlosen Signale von mehreren evolvierten Knoten B (Evolved Node Bs, eNBs) empfangen werden, die gleichzeitig an das UE übertragen.

3. Verfahren nach Anspruch 2, wobei die kollidierenden drahtlosen Signale als gemeinsame Übertragung von den mehreren eNBs gesendet werden.

4. Verfahren nach Anspruch 1, wobei das Herausfiltern der Bezugssignaldaten aus dem Überlagerungssignal umfasst:

    Detektieren der Bezugssignaldaten aus dem Überlagerungssignal;
    Abschätzen mindestens einer Kanalantwort aus den Bezugssignaldaten; und
    Subtrahieren der Bezugssignaldaten von dem drahtlosen Überlagerungssignal.

5. Verfahren nach Anspruch 4, wobei nach dem Subtrahieren der Bezugssignaldaten von dem Überlagerungssignal der verbleibende Teil des Überlagerungssignals die Benutzerdaten sind.

6. Verfahren nach Anspruch 1, wobei die Vielzahl von kollidierenden drahtlosen Signalen über kollidierende Ressourcenelemente gesendet wird.

7. Verfahren nach Anspruch 6, wobei die Bezugssignaldaten auf einem ersten Ressourcenelement empfangen werden und die Benutzerdaten auf einem zweiten Ressourcenelement empfangen werden.

8. Verfahren nach Anspruch 6, wobei es sich bei den kollidierenden Bezugssignalen um zellenspezifische Bezugssignale handelt.

9. Verfahren nach Anspruch 1, wobei keine der Benutzerdaten stummgeschaltet sind.

10. Mindestens ein maschinenlesbares Medium, das eine Vielzahl von Anweisungen umfasst, die in Reaktion auf ihre Ausführung durch ein Computergerät das Computergerät veranlassen, ein Verfahren gemäß einem der Ansprüche 1 bis 9 durchzuführen.

11. Benutzergerät (User Equipment, UE), umfassend:

    einen Transceiver; und
    ein gemeinsames Verarbeitungsmodul mit einem Speicher und einem Prozessor, wobei das UE innerhalb eines 3rd Generation Partnership Project (3GPP), Long Term Evolution-Advanced (LTE-Advanced) Netzwerks betrieben wird, und wobei der Speicher Anweisungen speichern soll und der Prozessor die Anweisungen ausführen soll, um:

        an dem Transceiver über ein Cooperative Multiple Point Transmission (CoMP) Szenario 3 ein erstes drahtloses Signal auf einem ersten Ressourcenelement zu empfangen, das mit einem zweiten drahtlosen Signal auf einem zweiten Ressourcenelement kollidiert, wobei das erste drahtlose Signal Bezugssignaldaten umfasst und das zweite drahtlose Signal Benutzerdaten umfasst, die über einen Physical Downlink Shared Channel (PDSCH) gesendet werden;
        die Bezugssignaldaten mit den Benutzerdaten zu einem Überlagerungssignal zu kombinieren;
        die Bezugssignaldaten aus dem Überlagerungssignal herauszufiltern; und

die Benutzerdaten aus dem Überlagerungssignal zu dekodieren.

**12.** UE nach Anspruch 11, wobei ein vorkodiertes Datensymbol über das erste Ressourcenelement und das zweite Ressourcenelement gesendet werden soll.

**13.** UE nach Anspruch 12, wobei das Herausfiltern der Bezugssignaldaten ein erstes restliches Signal auf dem ersten Ressourcenelement und ein zweites restliches Signal auf dem zweiten Ressourcenelement ergibt.

**14.** UE nach Anspruch 13, wobei die Anweisungen zum Dekodieren der Benutzerdaten von dem Überlagerungssignal ferner Anweisungen umfassen, um:

das erste restliche Signal mit dem zweiten restlichen Signal zu kombinieren.

**15.** UE nach Anspruch 11, wobei die Anweisungen zum Herausfiltern der Bezugssignaldaten aus dem Überlagerungssignal ferner Anweisungen umfassen, um:

die Bezugssignaldaten aus dem Überlagerungssignal zu detektieren;
mindestens eine Kanalantwort aus den Bezugssignaldaten abzuschätzen; und
die Bezugssignaldaten von dem drahtlosen Überlagerungssignal zu subtrahieren.

**Revendications**

**1.** Procédé, comprenant de :

recevoir, au niveau d'un équipement d'utilisateur (UE) opérant dans un réseau de technologie d'évolution à long terme avancée (LTE-Advanced) de projet de partenariat pour la troisième génération des techniques sans fil (3GPP) par l'intermédiaire d'un Scénario 3 de transmission multipoint coopérative (CoMP), une pluralité de signaux sans fil en collision, dans lequel l'un des signaux sans fil comprend des données de signal de référence et un autre des signaux sans fil comprend des données d'utilisateur transmises sur un canal physique partagé de liaison descendante (PDSCH);
combiner les données de signal de référence avec les données d'utilisateur dans un signal superposé;
filtrer les données de signal de référence à partir du signal superposé; et
décoder les données d'utilisateur à partir du signal superposé.

**2.** Procédé selon la revendication 1, dans lequel les signaux sans fil en collision sont reçus à partir de multiples noeuds B évolués (eNB) transmettant simultanément vers l'UE.

**3.** Procédé selon la revendication 2, dans lequel les signaux sans fil en collision sont envoyés sous la forme d'une transmission commune à partir des multiples eNB.

**4.** Procédé selon la revendication 1, dans lequel le filtrage des données de signal de référence à partir du signal superposé comprend de :

détecter les données de signal de référence à partir du signal superposé;
estimer au moins une réponse de canal à partir des données de signal de référence; et
soustraire les données de signal de référence du signal sans fil superposé.

**5.** Procédé selon la revendication 4, dans lequel, après la soustraction des données de signal de référence du signal superposé, la partie restante du signal superposé correspond aux données d'utilisateur.

**6.** Procédé selon la revendication 1, dans lequel la pluralité de signaux sans fil en collision sont transmis sur des éléments de ressource en collision.

**7.** Procédé selon la revendication 6, dans lequel les données de signal de référence sont reçues sur un premier élément de ressource, et les données d'utilisateur sont reçues sur un second élément de ressource.

**8.** Procédé selon la revendication 6, dans lequel les signaux de référence en collision sont des signaux de référence spécifiques aux cellules.

9. Procédé selon la revendication 1, dans lequel aucune des données d'utilisateur n'est rendue muette.

10. Au moins un support lisible par une machine comprenant une pluralité d'instructions qui, en réponse à leur exécution par un dispositif informatique, amènent le dispositif informatique à exécuter un procédé selon l'une quelconque des revendications 1 à 9.

11. Équipement d'utilisateur (UE), comprenant :

un émetteur-récepteur; et
un module de traitement commun ayant une mémoire et un processeur, dans lequel l'UE opère dans un réseau de technologie d'évolution à long terme avancée (LTE-Advanced) de projet de partenariat pour la troisième génération des techniques sans fil (3GPP),

et dans lequel la mémoire sert à stocker des instructions, et le processeur sert à exécuter les instructions pour :

recevoir, au niveau de l'émetteur-récepteur par l'intermédiaire d'un Scénario 3 de transmission multipoint coopérative (CoMP), un premier signal sans fil sur un premier élément de ressource en collision avec un second signal sans fil sur un second élément de ressource, dans lequel le premier signal sans fil comprend des données de signal de référence et le second signal sans fil comprend des données d'utilisateur transmises sur un canal physique partagé de liaison descendante (PDSCH);
combiner les données de signal de référence avec les données d'utilisateur dans un signal superposé;
filtrer les données de signal de référence à partir du signal superposé; et
décoder les données d'utilisateur à partir du signal superposé.

12. UE selon la revendication 11, dans lequel un symbole de données précodé doit être envoyé sur le premier élément de ressource et le second élément de ressource.

13. UE selon la revendication 12, dans lequel le filtrage des données de signal de référence aboutit à un premier signal restant sur le premier élément de ressource et à un second signal restant sur un second élément de ressource.

14. UE selon la revendication 13, dans lequel les instructions pour décoder les données d'utilisateur à partir du signal superposé comprennent en outre des instructions pour :

combiner le premier signal restant avec le second signal restant.

15. UE selon la revendication 11, dans lequel les instructions pour filtrer les données de signal de référence à partir du signal superposé comprennent en outre des instructions pour :

détecter les données de signal de référence à partir du signal superposé;
estimer au moins une réponse de canal à partir des données de signal de référence; et
soustraire les données de signal de référence du signal sans fil superposé.

130a

BASE STATION
(eNB)

130b

BASE STATION
(eNB)

150a
REFERENCE
SIGNAL

USER
DATA

USER
DATA

150b

REFERENCE
SIGNAL

140a

140b

USER DEVICE
(UE)

110

JOINT PROCESSING
MODULE

120

150c
USER
DATA

140c
REFERENCE
SIGNAL

BASE STATION
(eNB)

130c

FIG. 1

JT CELL 1    JT CELL 2

$$\bar{y}_1^{16} = \bar{H}_1^{16} \cdot s + \bar{H}_2^{16'} \cdot r_2$$

- - - SPATIAL MULTIPLEX - - - -

- - - SPATIAL MULTIPLEX - - - -

$$\bar{y}_2^{16} = \bar{H}_2^{16} \cdot s + \bar{H}_1^{16'} \cdot r_1$$

1 RB    1 RB

PDCCH RE    PDSCH RE    CRS RE

FIG. 2

110

RECEIVER — 310

PROCESSOR 340

MEMORY 330

TRANSMITTER

320

## FIG. 3

130a-c

RECEIVER — 410

PROCESSOR 440

MEMORY 430

TRANSMITTER

420

ROUTER — 450

## FIG. 4

500

RECEIVE, AT A USER DEVICE, A PLURALITY OF COLLIDING WIRELESS SIGNALS, WHERE ONE OF THE SIGNALS INCLUDES REFERENCE SIGNAL DATA AND THE OTHER SIGNAL INCLUDES USER DATA — 510

COMBINE REFERENCE SIGNAL DATA WITH USER DATA INTO A SUPERIMPOSED SIGNAL — 520

FILTER OUT REFERENCE SIGNAL DATA FROM THE SUPERIMPOSED DATA — 530

DECODE THE USER DATA FROM THE SUPERIMPOSED SIGNAL — 540

## FIG. 5

**EP 2 761 770 B1**

**Patent documents cited in the description**

- WO 61542086 A